# EUROPÄISCHE PATENTSCHRIFT

(11) **EP 2 020 895 B1**
(45) Veröffentlichungstag und Bekanntmachung des Hinweises auf die Patenterteilung: **03.07.2013**
(21) Anmeldenummer: 07725266.6
(22) Anmeldetag: 16.05.2007
(51) Int. Cl.: A47L 15/42, D06F 39/00, G01N 27/10

(54) **SENSOREINRICHTUNG ZUR LEITFÄHIGKEITSMESSUNG UND VERFAHREN ZU IHREM BETRIEB**
SENSOR DEVICE FOR MEASURING CONDUCTIVITY, AND METHOD OF OPERATING THE SAME
DISPOSITIF DE CAPTEUR POUR LA MESURE DE CONDUCTIVITÉ ET SON PROCÉDÉ DE FONCTIONNEMENT

(30) Priorität: 24.05.2006 DE 102006025622
(43) Veröffentlichungstag der Anmeldung: 11.02.2009
(73) Patentinhaber: E.G.O. ELEKTRO-GERÄTEBAU GmbH, 75038 Oberderdingen (DE)
(72) Erfinder: DORWARTH, Ralf, 75038 Oberderdingen (DE); MÜNZNER, Rainer, 08340 Schwarzenberg (DE); SCHMIDT, Kay, 76676 Graben-Neudorf (DE)
(74) Vertreter: Patentanwälte Ruff, Wilhelm, Beier, Dauster & Partner
(86) Internationale Anmeldenummer: PCT/EP2007/004350
(87) Internationale Veröffentlichungsnummer: WO 2007/134765

(56) Entgegenhaltungen:
- EP-A- 1 530 041
- DE-A1- 4 311 064
- US-A- 3 701 006
- US-A- 4 082 666
- US-A- 4 227 151
- US-A- 5 315 847
- WIKIPEDIA: 'Übertrager' Gefunden im Internet: <URL:http://de.wikipedia.org/wiki/%C3%9Cber trager> [gefunden am 2012-06-13]

## Beschreibung

### Anwendungsgebiet und Stand der Technik

Die Erfindung betrifft eine Sensoreinrichtung zur Leitfähigkeitsmessung gemäß dem Oberbegriff des Anspruchs 1 und ein Verfahren zum Betrieb einer solchen Sensoreinrichtung.

Es ist beispielsweise aus der DE 102005007935 A1 bekannt, an einer Heizeinrichtung für eine Waschmaschine oder Spülmaschine eine Sensoreinrichtung zur Leitfähigkeitsmessung anzubringen. Dabei reichen zwei sensorische Bereiche in das Wasser zur Leitfähigkeitsmessung. Diese beiden sensorischen Bereiche sind ganz einfach durch elektrische Anschlüsse nach außen kontaktiert.

Aus der DE 198 08 839 A1 ist es bekannt, eine derartige Sensoreinrichtung an einem Wäschetrockner vorzusehen. Zwei Elektroden sind an einem Sensormodul zur Leitfähigkeitsmessung vorgesehen mit einer Leitwertelektronik zur Ansteuerung sowie mit einem Optokoppler zur Übertragung der Signale zur Auswertung. Die Leitwertelektronik ist über einen Trafo mit Netzspannung verbunden. So ist es möglich, das Sensormodul über den Trafo sowie den Optokoppler galvanisch vom restlichen Gerät abzutrennen.

Die US 3701006 A zeigt eine Sensoreinrichtung zur Leitfähigkeitmessung von Bohrschlamm, bei der zwei Elektroden direkt mit Messmitteln verbunden sind. Die dadurch erzeugten Signale werden mittels eines Operationsverstärkers zu Aufnahmegeräten weitergeleitet, die den Signalverlauf aufnehmen.

Die US 4082666 A zeigt eine Sensoreinrichtung zur Leitfähigkeitsmessung bei einem Wasserenthärter. Die Sensoren sind dabei mit einem Transformator verbunden, der an das Haushalts-Stromnetz angeschlossen werden kann. Gleichzeitig sind sie aber auch direkt mit einer Auswertung verbunden. Der Transformator sitzt in einem Gehäuse und wird mittels eines Kabels an das Haushalts-Stromnetz angeschlossen. An einem anderen Kabel sind die Sensoren angebracht zum Anschluss an eine Wasserleitung des Enthärters odgl..

Die US 4227151 A zeigt eine Sensoreinrichtung zur Leitfähigkeitsmessung einer Flüssigkeit, beispielsweise in einer Waschmaschine. Mehrere ringförmige Elektroden sind dabei einem Schraubanschluss untergebracht und können über einen Stecksockel elektrisch angeschlossen werden bzw. mit einer Auswertung verbunden werden. Eine der Elektroden ist dabei an einen Transformator in der Auswertung angeschlossen, der eine Wechselspannung erzeugt für die Leitfähigkeitsmessung.

Die EP 1 530 041 A1 zeigt eine Sensoreinrichtung zur Leitfähigkeitsmessung mit mehreren Elektroden. Diese können in einen Wasservorrat reichen. An ihrem freien Ende weisen sie einen Anschlussverbinder auf zum elektrischen Anschluss an eine Ansteuerung.

Die US 5,315,847 A zeigt eine Sensoreinrichtung zur Leitfähigkeitsmessung in einer Waschmaschine. Die Elektroden sind auf einer Leiterplatte als Sensorträger angeordnet und liegen dabei teilweise frei zur Leitfähigkeitsmessung. Als elektrische Kontaktierung sind an die Leiterplatte Anschlusskabel geführt und dort festgelötet. Die Leiterplatte als Sensorträger ist in ein Sensorgehäuse, welches zur Oberseite hin offen ist, mit Kunstharz ausgegossen. Lediglich die Anschlusskabel laufen heraus.

### Aufgabe und Lösung

Der Erfindung liegt die Aufgabe zugrunde, eine eingangs genannte Sensoreinrichtung sowie ein Verfahren zum Betrieb einer solchen Sensoreinrichtung zu schaffen, mit denen Probleme des Standes der Technik vermieden werden können und insbesondere ein einfacher und praxistauglicher Aufbau einer Sensoreinrichtung bei sicherer Funktion geschaffen werden kann.

Gelöst wird diese Aufgabe durch eine Sensoreinrichtung mit den Merkmalen des Anspruchs 1 sowie ein Verfahren mit den Merkmalen des Anspruchs 14. Vorteilhafte sowie bevorzugte Ausgestaltungen der Erfindung sind in den weiteren Ansprüchen enthalten und werden im Folgenden näher erläutert. Manche Merkmale der Erfindung werden nur einmal nachfolgend erläutert. Sie sollen jedoch unabhängig davon für verschiedene Ausbildungen der Erfindung gelten. Der Wortlaut der Ansprüche wird durch ausdrückliche Bezugnahme zum Inhalt der Beschreibung gemacht.

Es ist vorgesehen, dass das wasserführende bzw. mit verschmutztem Wasser arbeitende Elektrogerät, welches beispielsweise ein Elektrohaushaltsgerät wie eine Waschmaschine oder eine Spülmaschine sein kann, mit der Sensoreinrichtung versehen ist. An einem Sensorträger der Sensoreinrichtung sind zwei Elektroden als Sensoren vorgesehen, mit denen eine Leitfähigkeitsmessung durchgeführt wird. Aus dieser Leitfähigkeitsmessung kann dann beispielsweise der Verschmutzungsgrad des Wassers bestimmt werden. Die beiden Elektroden bzw. Sensoren sind direkt und ohne weitere Bauelemente, Koppelschaltungen odgl. mit einem Übertrager bzw. Transformator verbunden. Insbesondere kann dies dergestalt sein, dass der eine Anschluss des Übertragers mit der einen Elektrode verbunden ist und der andere Anschluss des Übertragers auf dieser Seite mit der anderen Elektrode. Dadurch wird eine galvanische Trennung der Elektroden, die schließlich zwingend mit dem Wasser in Kontakt kommen, von dem sonstigen Elektrogerät erreicht, insbesondere einer Ansteuerung und Auswertung. So wird die galvanische Trennung mit geringem Bauaufwand realisiert, da vor allem nur die zwingend notwendig spannungsführenden Teile der Sensoreinrichtung bzw. des Gerätes galvanisch getrennt werden müssen. Durch die galvanische Trennung unmittelbar bzw. sehr nahe an den Elektroden wird die zu übertragende Energie reduziert. So können die Anforderungen an den Übertrager hinsichtlich Baugröße und damit die gesamte Baugröße der Sensoreinrichtung sowie auch die Kosten reduziert werden.

Vorteilhaft ist der Übertrager in unmittelbarer Nähe der Elektroden angeordnet. Dies ist beispielsweise ein Abstand in der Größenordnung des Abstandes der beiden Elektroden voneinander. Insbesondere sind dies wenige Zentimeter, beispielsweise 1cm bis 5cm oder soar bis 10cm. Durch diesen geringen Abstand kann sowohl die gesamte Baugröße der Sensoreinrichtung reduziert werden als auch mögliche Störungseinflüsse durch unnötig lange Übertragungswege odgl..

Die Elektroden und der Übertrager bilden bei der Erfindung eine gemeinsame Baueinheit bzw. sind Bestandteil einer solchen. Dabei sind sie auf einem gemeinsamen Träger angeordnet, welcher insbesondere eine Leiterplatte odgl. sein kann. Elektrische Verbindungen dazwischen, insbesondere zwischen dem Übertrager einerseits und den Elektroden andererseits, sind vorteilhaft als Leiterbahnen auf dem Träger ausgeführt. Der Träger kann entweder aus Kunststoff oder aus einem Keramikmaterial bestehen. Die Befestigung der Teile auf dem Träger kann durch Kleben erfolgen, alternativ durch Festlöten. Eine solche Baueinheit kann leicht in ein Sensorgehäuse eingesetzt werden. Dieses kann länglich bzw. kanalartig oder rohrartig ausgebildet sein zur Unterbringung der vorgenannten Baueinheit bzw. der Bauteile der Sensoreinrichtung darin. Dabei müssen im zusammengebauten bzw. betriebsfertigen Zustand die Elektroden zumindest teilweise frei liegen bzw. erreichbar sein. Dazu kann vorgesehen sein, dass zumindest der Übertrager im Inneren des Sensorgehäuses angeordnet ist. Auch die Elektroden sind vorteilhaft im Inneren des Sensorgehäuses angeordnet, beispielsweise hinter Ausnehmungen im Sensorgehäuse. Diese Ausnehmungen werden vorteilhaft durch die Elektroden verschlossen bzw. abgedichtet, unter Umständen mit Hilfe von speziellen Dichtmitteln. Ebenso ist es möglich, dass die Elektroden außen an das Sensorgehäuse angesetzt werden. Dann ist jedoch die elektrische Verbindung zu dem Übertrager schwieriger zu realisieren.

Sind die Elektroden und der Übertrager im Sensorgehäuse angeordnet, so ist vorteilhaft eine elektrische Anschlussmöglichkeit vorgesehen, die aus dem Sensorgehäuse an einem freien bzw. hinteren Ende heraussteht. Diese Anschlussmöglichkeit kann beispielsweise ein Steckanschluss sein oder freiliegende Kontaktfelder zum Anlöten.

In vorteilhafter Ausgestaltung der Erfindung kann eine Bus-Schaltung, insbesondere in einem integrierten Schaltkreis, vorgesehen sein. Besonders vorteilhaft ist sie Teil der Sensoreinrichtung bzw. innerhalb des Sensorgehäuses angeordnet, beispielsweise zwischen dem Übertrager und der vorgenannten Anschlussmöglichkeit. Dabei dient diese Anschlussmöglichkeit als Schnittstelle zur Ansteuerung und/oder Auswertung der Sensoren. Durch diese Bus-Schaltung ist eine erleichterte Kommunikation, also Ansteuerung und Auswertung der Elektroden, möglich. Des Weiteren können dadurch auch weitere Sensoren angeschlossen werden, wie nachfolgend noch genauer erläutert wird. Diese Bus-Schaltung sollte ebenso wie eine vorgenannte elektrische Anschlussmöglichkeit außerhalb wasserführender Bereiche des Gerätes angeordnet sein.

Des Weiteren kann die Sensoreinrichtung, insbesondere in dem Sensorgehäuse bzw. auf dem vorgenannten gemeinsamen Träger, eine Auswerteeinrichtung aufweisen, insbesondere einen Mikroprozessor. Dieser kann eventuell noch einige Beschaltungs-Bauteile aufweisen. Der Mikroprozessor ist, ebenso wie eine vorgenannte Bus-Schaltung, auf einer anderen Seite des Übertragers von den Elektroden angeordnet. Er stellt sozusagen eine eingebaute Intelligenz der Sensoreinrichtung dar. Dadurch können die Messdaten der Elektroden verarbeitet und bereits vorausgewertet werden, um eine abstrakt verwendbare Information zu gewinnen. Diese kann dann eventuell über die Bus-Schaltung außen abgegriffen werden, beispielsweise zur Verwertung in einer Steuerung des Elektrogerätes. Der Vorteil der Informationsverarbeitung nahe an den Elektroden bzw. in der Sensoreinrichtung liegt darin, dass für den weiteren, unter Umständen Störeinflüssen ausgesetzten Übertragungsweg ein leicht erkennbares, eindeutiges Signal erzeugt werden kann. Die Auswertung kann also beispielsweise eine konkrete Leitwert- oder Widerstandsangabe beinhalten, ebenso das Über- oder Unterschreiten bestimmter Grenzwerte.

Es ist möglich, die vorgenannte Baueinheit aus Elektroden und Übertrager, insbesondere auch mit weiteren Einrichtungen wie dem vorgenannten Mikroprozessor und/oder einer Bus-Schaltung, elektrisch zu isolieren, wobei dann lediglich die Elektroden und gegebenenfalls elektrische Anschlussmöglichkeiten frei bleiben. Eine solche elektrische Isolierung kann beispielsweise ein Überzug mit einer Isolierschicht, beispielsweise Isolierlack oder Wachs, sein. Ebenso ist es nach dem Einsetzen der Bauteile bzw. der Baueinheit in das Sensorgehäuse möglich, diese mit einem der vorgenannten Isoliermaterialien auszugießen.

Wie zuvor angedeutet worden ist, ist es möglich, an der Sensoreinrichtung bzw. an dem Sensorgehäuse weitere Sensoren vorzusehen. Auch diese können frei liegen bzw. von außen erreichbar sein. Dies kann beispielsweise ein Temperatursensor sein, mit dem die Temperatur des Wassers erfasst wird. Auch weitere Sensoren sind möglich, wie im Folgenden beschrieben wird.

Bei einer Ausgestaltung kann vorgesehen sein, dass ein Sensor bzw. weiterer Sensor derart ausgebildet ist, dass er bei hohen Frequenzen hochohmig ist, also sozusagen nicht vorhanden. Bei niedrigen Frequenzen dagegen verursacht er eine auswertbare Dämpfung, insbesondere beim Anschluss an den Übertrager. Vor allem dann, wenn ein anderer Sensor bzw. die beiden Elektroden zur Leitfähigkeitsmessung bei niederen Frequenzen hochohmig sind und bei hohen Frequenzen die auswertbare Dämpfung auf dem Übertrager verursachen, können diese mehreren verschiedenartigen Sensoren an der Sensoreinrichtung vorgesehen werden und gleichzeitig über den Übertrager bzw. dessen beiden Anschlüsse auf einer Seite angeschlossen werden. Je nach Frequenzbereich wird also ein Sensor bzw. eine Art von Sensor aktiviert bzw. ausgewertet. Selbstverständlich kann dies in Bezug auf die beiden vorgenannten Elektroden mit der Frequenzabhängigkeit auch andersherum sein.

Bei einer weiteren Ausgestaltung ist es möglich, dass ein Sensor oder mehrere Sensoren jeweils eine ausgeprägte Resonanzfrequenz aufweisen, bei der sie dann deutlich niederohmiger sind als in dem restlichen Frequenzbereich. So können nahezu beliebig viele Sensoren mit jeweils unterschiedlicher Resonanzfrequenz über denselben Übertrager ausgewertet werden, nämlich durch Ansteuern mit ihrer Resonanzfrequenz.

In nochmals weiterer Ausgestaltung der Erfindung ist es möglich, dass zumindest einer der Sensoren frequenzunabhängig ist. Hier ist es möglich, dass im Anschluss an die Messungen bei verschiedenen Frequenzen der Einfluss des frequenzunabhängigen Sensors, dessen Eigenschaften bekannt sind, gemessen werden kann. So können seine Einflüsse eliminiert werden, wodurch dann wiederum die Eigenschaften der frequenzabhängigen Sensoren ausgewertet werden können.

Mit den vorgenannten Verfahren ist es also jeweils auf unterschiedliche Art und Weise möglich, eine erfindungsgemäße Sensoreinrichtung zu betreiben, insbesondere dann, wenn sie zu den beiden vorgenannten Elektroden noch weitere Sensoren aufweist, wobei diese gemäß einem der vorgenannten Beispiele ausgebildet sein können.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ein Ausführungsbeispiel der Erfindung ist in den Zeichnungen schematisch dargestellt und wird im Folgenden näher erläutert. In den Zeichnungen zeigt:
- Fig. 1: eine auseinandergezogene Sensoreinrichtung mit einem Träger für die Bauteile und einem dafür vorgesehenen Sensorgehäuse,
- Fig. 2: die beiden Teile aus Fig. 1 ineinander gesteckt und
- Fig. 3: eine Draufsicht auf die Sensoreinrichtung gemäß Fig. 2 mit einem weiteren Temperatursensor, die in die Wand einer Wasserführung eines Elektrogerätes eingebaut ist.

### Detaillierte Beschreibung der Zeichnungen

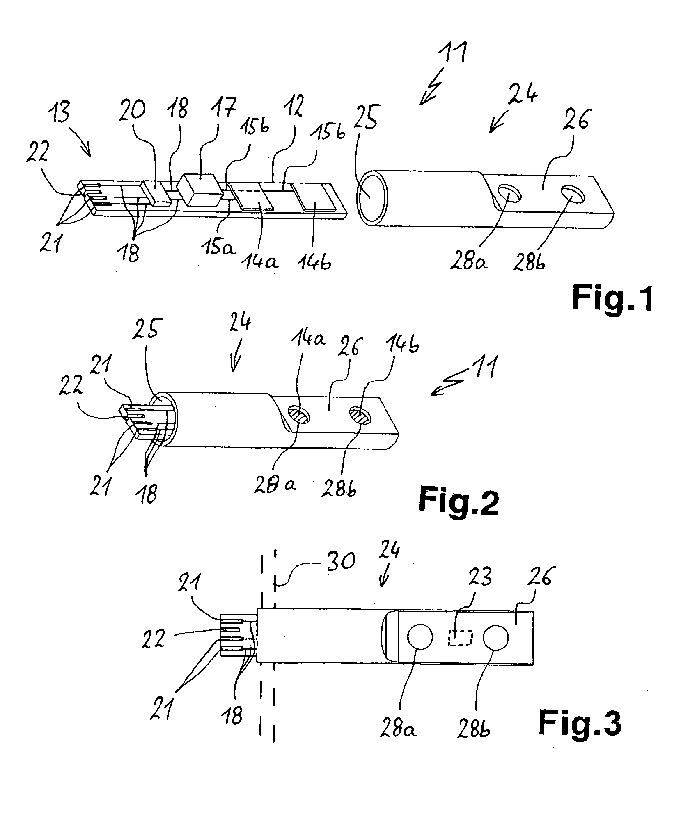

In Fig. 1 ist eine Sensoreinrichtung 11 dargestellt bzw. deren beiden Teile. Der längliche Träger 12, beispielsweise aus Kunststoff oder Keramik, weist an seinem rechten Bereich die Elektroden 14a und 14b auf. Sie weisen einen Abstand von wenigen Zentimetern auf und sind als leitfähige Flächen ausgebildet, wie aus der vorgenannten DE 102005007935 A1 bekannt. Über Leiterbahnen 15a und 15b auf dem Träger 12 sind sie mit einem Übertrager 17 elektrisch verbunden. Der Übertrager 17 ist ebenso wie die Elektroden 14 auf dem Träger 12 befestigt. Er ist als kleiner Transformator ausgebildet, wie dem Fachmann bekannt ist, insbesondere aus der Signaltechnik.

Der Übertrager 17 ist mittels weiterer Leiterbahnen 18 mit einem Mikroprozessor 20 verbunden, der ebenfalls auf dem Träger 12 befestigt ist. Der Mikroprozessor 20 wiederum ist über Leiterbahnen 18 mit Kontaktfeldern 21 am linken Trägerende 13 verbunden bzw. über diese kontaktierbar. Dabei können natürlich je nach Ausbildung auch mehr als die gezeigten drei Kontaktfelder 21 bzw. Leiterbahnen 18 vorgesehen sein. Bei aufwendigerer Bauweise des Trägers 12 ist es auch möglich, auf der Unterseite des Trägers weitere Kontaktfelder vorzusehen. Die Kontaktfelder 21 sind, insbesondere mit dem Schlitz 22 dazwischen, zum direkten Aufstecken einer Steckverbindung als Anschluss ausgebildet.

Die Anordnung der Bauteile sowie der Leiterbahnen auf dem Träger 12 ist je nach Anwendung, insbesondere je nach Material bzw. Herstellung des Trägers 12, möglicherweise unterschiedlich. Der Fachmann kann hier eine jeweils möglichst vorteilhafte Ausbildung wählen.

Rechts in Fig. 1 ist das Sensorgehäuse 24 dargestellt. Es ist länglich und rohrartig, wobei das linke Ende mit einer Öffnung 25 offen ist zum Einführen des Trägers 12. Das rechte Ende ist verschlossen. In dem rechten flachen Teil 26 des Sensorgehäuses 24 sind zwei Ausnehmungen 28a und 28b ausgebildet. Zur Ausbildung dieses Sensorgehäuses 24 wird ebenfalls auf die vorgenannte DE 102005007935 A1 verwiesen. In Fig. 2 ist dargestellt, wie der Träger 12 in das Sensorgehäuse 24 eingesteckt ist. Dabei liegen die Elektroden 14a und 14b unter den Ausnehmungen 28a und 28b, wie durch die Schraffur verdeutlicht wird. Insbesondere dichten entweder die Elektroden 14 die Ausnehmungen 28 von innen ab oder es werden Dichtmittel wie elastische Dichtmassen, Dichtringe oder leitfähige Dichtkleber odgl. verwendet. Der rechte Bereich des Sensorgehäuses 24 bzw. der Sensoreinrichtung 11, insbesondere der gesamte flache Teil 26, soll in eine Wasserführung hineinragen.

Dies ist aus Fig. 3 zu erkennen. Dort steht der weitaus größte Bereich der Sensoreinrichtung 11 durch eine Wand 30 einer Wasserführung hindurch bzw. in Wasser in der Wasserführung hinein. Eine Befestigung kann auf verschiedene Art und Weise erfolgen, beispielsweise durch Festschrauben, Klemmsitz oder Verschweißen. Es ist auch möglich, zuerst das Sensorgehäuse 24 an der Wand 30 zu befestigen und dann den Träger 12 einzubringen.

Es ist in Fig. 3 zu erkennen, wie das linke Ende mit der Öffnung 25 des Sensorgehäuses 24 auf der anderen Seite der Wasserführung 30 heraussteht, ebenso das linke Trägerende 13 mit den Kontaktfeldern 21. So ist eine leichte Kontaktierung möglich, wobei gleichzeitig sichergestellt wird, dass keine Feuchtigkeit von der Wasserführung an diese Bereiche gelangen kann.

Des Weiteren ist als Abwandlung in Fig. 3 gestrichelt ein Temperatursensor 23 dargestellt, der in dem flachen Teil 26 der Sensoreinrichtung 11 angeordnet ist. Der Temperatursensor 23 kann ein üblicher Temperatursensor auf Widerstandsbasis oder für eine Frequenzabhängigkeit eine temperaturabhängige Kapazität sein. Er ist ebenso wie die Elektroden 14 auf dem Träger 12 befestigt und kann ebenso wie die Elektroden 14 über Leiterbahnen 15a und 15b mit den beiden Anschlüssen einer Seite des Übertragers 17 verbunden sein. Er kann vorgenannte frequenzabhängige Widerstandseigenschaften aufweisen, die eine getrennte Auswertung über denselben Übertrager 17 ermöglichen wie die Leitfähigkeitsmessung über die Elektroden 14. Der Temperatursensor 23 kann entweder in möglichst gut wärmeleitendem Kontakt mit dem Sensorgehäuse 24 stehen. Alternativ kann er, ebenso wie die Elektroden 14, an einer Ausnehmung angeordnet sein und in direktem Kontakt mit Wasser sein. Vorteilhaft ist er jedoch innerhalb des Sensorgehäuses 24 und somit abgekapselt angeordnet.

Ansteuerung und Auswertung sowohl der Elektroden 14 zur Leitfähigkeitsmessung als auch des Temperatursensors 23 zur Temperaturmessung erfolgen wie vorstehend beschrieben. Deswegen braucht darauf nicht nochmals eingegangen zu werden.

Der Temperatursensor kann auch direkt mit dem Mikroprozessor 20 verbunden sein. Dann ist jedoch keine galvanische Trennung vorgesehen und es sollte nur dann gemacht werden, wenn der Temperatursensor 23 innerhalb des Sensorgehäuses 24 angeordnet ist.

## Patentansprüche

1. Sensoreinrichtung (11) zur Leitfähigkeitsmessung für ein wasserführendes und/oder mit verschmutztem Wasser arbeitendes Elektrogerät mit einer Wasserführung (30), insbesondere für ein Elektrohausgerät wie beispielsweise eine Waschmaschine oder eine Spülmaschine, wobei an einem Sensorträger (12) zwei Elektroden (14a, 14b) als Sensoren vorgesehen sind zur Leitfähigkeitsmessung, wobei die beiden Elektroden (14a, 14b) direkt ohne weitere Bauelemente oder Koppelschaltungen mit einem Transformator (17) verbunden sind, wobei die Elektroden (14a, 14b) und der Transformator (17) eine gemeinsame Baueinheit bilden und auf einem gemeinsamen Träger (12) angeordnet sind, wobei sie ein Sensorgehäuse (24) aufweist, welches länglich bzw. kanalartig ausgebildet ist, wobei im betriebsfertigen Zustand die Elektroden (14a, 14b) zumindest teilweise frei liegen bzw. erreichbar sind, wobei die Elektroden (14a, 14b) und der Transformator (17) im Inneren des Sensorgehäuses (24) angeordnet sind, wobei eine elektrische Anschlussmöglichkeit zum elektrischen Anschluss am aus dem Sensorgehäuse (24) hinten herausstehenden Ende (13) eines gemeinsamen Trägers (12) für die Elektroden (14a, 14b) und den Transformator (17) angeordnet ist.

2. Sensoreinrichtung nach Anspruch 1, **dadurch gekennzeichnet, dass** der Transformator (17) in unmittelbarer Nähe der Elektroden (14a, 14b) angeordnet ist, vorzugsweise mit einem Abstand in der Größenordnung des Abstandes der beiden Elektroden zueinander, insbesondere mit einem Abstand von wenigen Zentimetern.

3. Sensoreinrichtung nach Anspruch 1 oder 2, **dadurch gekennzeichnet, dass** elektrische Verbindungen (15a, 15b) zwischen den Elektroden (14a, 14b) und dem Transformator (17) als Leiterbahnen auf dem Träger (12) ausgeführt sind.

4. Sensoreinrichtung nach einem der vorhergehenden Ansprüche, **dadurch gekennzeichnet, dass** die elektrische Anschlussmöglichkeit als Kontaktfelder (21) ausgebildet ist.

5. Sensoreinrichtung nach Anspruch 1, **dadurch gekennzeichnet, dass** das Sensorgehäuse (24) länglich bzw. rohrartig ausgebildet ist mit einem abgeflachten Bereich (26) und Ausnehmungen (28a, 28b) darin, an denen die Elektroden (14a, 14b) angeordnet sind, wobei insbesondere die Elektroden die Ausnehmungen verschließen bzw. abdichten.

6. Sensoreinrichtung nach einem der vorhergehenden Ansprüche, **gekennzeichnet durch** eine Bus-Schaltung (20) zwischen dem Transformator (17) und der elektrischen Anschlussmöglichkeit (21) als Schnittstelle zur Ansteuerung und/oder Auswertung der Sensoren (14a, 14b).

7. Sensoreinrichtung nach einem der vorhergehenden Ansprüche, **dadurch gekennzeichnet, dass** eine elektrische Anschlussmöglichkeit, insbesondere eine Bus-Schaltung (20), außerhalb wasserführender Bereiche (30) des Elektrogerätes liegt.

8. Sensoreinrichtung nach einem der vorhergehenden Ansprüche, **dadurch gekennzeichnet, dass** auf einem gemeinsamen Träger (12) der Elektroden (14a, 14b) und des Transformators (17) bzw. in einem Sensorgehäuse (24) ein Mikroprozessor (20) und eventuell dessen Beschaltung angeordnet sind, wobei deren elektrische Anschlussmöglichkeiten (21) außerhalb des Sensorgehäuses (24) bzw. außerhalb wasserführender Bereiche (30) der Sensoreinrichtung (11) liegen.

9. Sensoreinrichtung nach einem der vorhergehenden Ansprüche, **gekennzeichnet durch** weitere Sensoren (23) an oder in dem Sensorgehäuse (24), wobei vorzugsweise weitere Sensoren frei liegen bzw. von außen erreichbar sind.

10. Sensoreinrichtung nach Anspruch 9, **dadurch gekennzeichnet, dass** ein weiterer Sensor (23) bei hohen Frequenzen einer Ansteuerung hochohmig ist und bei niedrigen Frequenzen niederohmig ist bzw. eine auswertbare Dämpfung auf die Ansteuerung bzw. den Transformator (17) verursacht.

11. Sensoreinrichtung nach Anspruch 9, **dadurch gekennzeichnet, dass** ein weiterer Sensor (23) bei niedrigen Frequenzen einer Ansteuerung hochohmig ist und bei hohen Frequenzen niederohmig ist bzw. eine auswertbare Dämpfung auf die Ansteuerung bzw. den Transformator (17) verursacht.

12. Sensoreinrichtung nach einem der Ansprüche 9 bis 11, **dadurch gekennzeichnet, dass** zumindest ein Sensor eine Frequenzabhängigkeit einer Ansteuerung aufweist und ein anderer Sensor frequenzunabhängig ist zur separaten Messung seines Einflusses bei der Auswertung der Messungen an dem anderen Sensor.

13. Sensoreinrichtung nach einem der Ansprüche 9 bis 12, **dadurch gekennzeichnet, dass** mindestens ein Sensor, vorzugsweise mehrere Sensoren, eine ausgeprägte Resonanzfrequenz aufweist, bei der er deutlich niederohmiger ist als im restlichen Frequenzbereich zur Auswertung dieses Sensors bei bekannter Frequenz an dieser Resonanzfrequenz.

14. Verfahren zum Betrieb einer Sensoreinrichtung (11) nach einem der vorhergehenden Ansprüche, wobei die Elektroden (14a, 14b) bzw. der Transformator (17) mit Pulsen hoher Frequenz angesteuert werden zur Messung der Dämpfung durch den Leitwert des Wassers an den Elektroden.

## Claims

1. A sensor device (11) for conductivity measurement for a water-carrying electrical appliance and/or an electrical appliance operating with contaminated water and having a water duct (30), in particular for a domestic electrical appliance such as a washing machine or a dishwasher, for example, wherein two electrodes (14a, 14b) are provided as sensors for conductivity measurement on a sensor carrier (12), wherein the two electrodes (14a, 14b) are connected directly without further components or coupling circuits to a transformer (17), wherein the electrodes (14a, 14b) and the transformer (17) form a common module and are disposed on a common carrier (12), wherein it has an elongated or channel-like sensor housing (24), wherein in the ready-to-operate state the electrodes (14a, 14b) are at least partly exposed or are accessible, wherein the electrodes (14a, 14b) and the transformer (17) are located in the interior of the sensor housing (24), wherein an electrical connection possibility is provided for electrical connection to an end (13) of a common carrier (12) for the electrodes (14a, 14b) and the transformer (17) projecting from the rear of the sensor housing (24).

2. The sensor device according to claim 1, **characterized in that** the transformer (17) is positioned in the immediate vicinity of the electrodes (14a, 14b), preferably with a spacing of the same order of magnitude as the spacing between the two electrodes, in particular with a spacing of a few centimetres.

3. The sensor device according to claim 1 or 2, **characterized in that** electrical connections (15a, 15b) are implemented between the electrodes (14a, 14b) and the transformer (17) as conducting tracks on the carrier (12).

4. The sensor device according to any of the preceding claims, **characterized in that** the electrical connection possibility are contact banks (21).

5. The sensor device according to claim 1, **characterized in that** the sensor housing (24) is elongated or tubular with a flattened area (26) and apertures (28a, 28b) therein, and on which are located the electrodes (14a, 14b), said electrodes more particularly closing or sealing the apertures.

6. The sensor device according to any of the preceding claims, **characterized by** a bus connection (20) between the transformer (17) and the electrical connection possibility (21) as an interface for activating and/or evaluating the sensors (14a, 14b).

7. The sensor device according to any of the preceding claims, **characterized in that** an electrical connection possibility, in particular a bus connection (20), is located outside the water-carrying areas (30) of the electrical appliance.

8. The sensor device according to any of the preceding claims, **characterized in that** on a common carrier (12) for the electrodes (14a, 14b) and the transformer (17) or in a sensor housing (24) are provided a microprocessor (20) and optionally its circuitry, its electrical connection possibilities (21) being located outside the sensor housing (24) or outside water-carrying areas (30) of the sensor device (11).

9. The sensor device according to any of the preceding claims, **characterized by** further sensors (23) on or in the sensor housing (24), preferably further sensors being exposed or accessible from the outside.

10. The sensor device according to claim 9, **characterized in that** a further sensor (23) is high-impedance at high frequencies of an activation means and low-impedance at low frequencies or gives rise to an evaluatable damping on the activation means or the transformer (17).

11. The sensor device according to claim 9, **characterized in that** a further sensor (23) is high-impedance at low frequencies of an activation means and low-impedance at high frequencies or gives rise to an evaluatable damping on the activation means or the transformer (17).

12. The sensor device according to any of the claims 9 to 11, **characterized in that** at least one sensor has a frequency dependence of an activation means and one other sensor is frequency-independent for separate measurement of its influence when evaluating the measurements on the other sensor.

13. The sensor device according to any of the claims 9 to 12, **characterized in that** at least one sensor, preferably several sensors, have a marked resonant frequency, at which it is clearly lower impedance than in the remaining frequency range for the evaluation of said sensor at known frequency at said resonant frequency.

14. A method for operating a sensor device (11) according to any of the preceding claims, wherein the electrodes (14a, 14b) or the transformer (17) are activated with high frequency pulses for measuring the damping through the conductance of the water at the electrodes.

## Revendications

1. Dispositif de détection (11) destiné à mesurer la conductivité pour un appareil électrique à circulation d'eau et/ou fonctionnant avec de l'eau polluée comportant une conduite d'eau (30), notamment pour un appareil électrique comme par exemple une machine à laver ou un lave-vaisselle, dans lequel deux électrodes (14a, 14b) sont prévues en tant que capteurs sur un support de capteur (12) pour la mesure de conductivité, dans lequel les deux électrodes (14a, 14b) sont directement connectées à un transformateur (17) sans autres composants ou circuits de couplage, dans lequel les électrodes (14a, 14b) et le transformateur (17) forment une unité structurelle commune et sont disposés sur un support commun (12), lequel dispositif comprend un boîtier de capteur (24) qui est réalisé de manière à présenter une forme allongée ou de type canal, dans lequel, dans l'état prêt au fonctionnement, les électrodes (14a, 14b) sont au moins partiellement exposées ou accessibles, dans lequel les électrodes (14a, 14b) et le transformateur (17) sont disposés à l'intérieur du boîtier de capteur (24), dans lequel une installation de raccordement électrique destinée au raccordement électrique est disposée sur une extrémité arrière (13) d'un support commun (12) faisant saillie par rapport au boîtier de capteur (24) pour les électrodes (14a, 14b) et le transformateur (17).

2. Dispositif de détection selon la revendication 1, **caractérisé en ce que** le transformateur (17) est disposé à proximité immédiate des électrodes (14a, 14b), avec de préférence un espacement approximativement égal à l'espacement entre les deux électrodes, notamment avec un espacement de quelques centimètres.

3. Dispositif de détection selon la revendication 1 ou 2, **caractérisé en ce que** des connexions électriques (15a, 15b) sont établies entre les électrodes (14a, 14b) et le transformateur (17) sous la forme de pistes conductrices sur le support (12).

4. Dispositif de détection selon l'une quelconque des revendications précédentes, **caractérisé en ce que** l'installation de raccordement électrique est réalisée sous la forme d'une zone de contact (21).

5. Dispositif de détection selon la revendication 1, **caractérisé en ce que** le boîtier de capteur (24) est réalisé de manière à présenter une forme allongée ou de tubulaire, avec dans celui-ci une zone aplatie (26) et des évidements (28a, 28b) sur lesquels sont disposées les électrodes (14a, 14b), les électrodes, en particulier, refermant ou rendant étanches les évidements.

6. Dispositif de détection selon l'une quelconque des revendications précédentes, **caractérisé par** une liaison de bus (20) entre le transformateur (17) et l'installation de raccordement (21) sous la forme d'une interface destinée à commander et/ou à analyser les capteurs (14a, 14b).

7. Dispositif de détection selon l'une quelconque des revendications précédentes, **caractérisé en ce qu'**une installation de raccordement électrique, notamment une liaison de bus (20), est située à l'extérieur de zones de circulation d'eau (30) de l'appareil électrique.

8. Dispositif de détection selon l'une quelconque des revendications précédentes, **caractérisé en ce qu'**un microprocesseur (20) ainsi qu'éventuellement des circuits qui lui sont associés sont disposés sur un support commun (12) des électrodes (14a, 14b) et du transformateur (17) ou dans un boîtier de capteur (24), dans lequel leurs installations de raccordement électrique (21) sont placées à l'extérieur du boîtier de capteur (24) ou à l'extérieur de zones de circulation d'eau (30) du dispositif de détection (11).

9. Dispositif de détection selon l'une quelconque des revendications précédentes, **caractérisé par** des capteurs supplémentaires (23) sur ou dans le boîtier de capteur (24), les capteurs supplémentaires étant de préférence exposés ou accessibles de l'extérieur.

10. Dispositif de détection selon la revendication 9, **caractérisé en ce qu'**un capteur supplémentaire (23) présente une impédance élevée aux fréquences élevées d'une commande et présente une faible impédance aux basses fréquences ou provoque une atténuation exploitable sur la commande ou le transformateur (17).

11. Dispositif de détection selon la revendication 9, **caractérisé en ce qu'**un capteur supplémentaire (23) présente une impédance élevée aux basses fréquences d'une commande et présente une faible impédance aux fréquences élevées ou provoque une atténuation exploitable sur la commande ou sur le transformateur (17).

12. Dispositif de détection selon l'une quelconque des revendications 9 à 11, **caractérisé en ce qu'**au moins un capteur présente une dépendance de la fréquence d'une commande et **en ce qu'**un autre capteur est indépendant de la fréquence pour une mesure séparée de son influence sur l'évaluation des mesures effectuées sur l'autre capteur.

13. Dispositif de détection selon l'une quelconque des revendications 9 à 12, **caractérisé en ce qu'**au moins un capteur, et de préférence plusieurs capteurs, présente/présentent une fréquence de résonance prononcée pour laquelle son impédance est sensiblement plus faible que dans la plage de fréquences restante pour l'évaluation de ce capteur à cette fréquence de résonance pour une fréquence connue.

14. Procédé de mise en fonctionnement d'un dispositif de détection (11) selon l'une quelconque des revendications précédentes, dans lequel les électrodes (14a, 14b) ou le transformateur (17) sont commandés au moyen d'impulsions à haute fréquence pour mesurer l'atténuation par l'intermédiaire de la conductivité de l'eau au niveau des électrodes.
